# EUROPÄISCHE PATENTSCHRIFT

(11) **EP 4 166 730 B1**
(45) Veröffentlichungstag und Bekanntmachung des Hinweises auf die Patenterteilung: **28.01.2026**
(21) Anmeldenummer: 22200181.0
(22) Anmeldetag: 07.10.2022
(51) Int. Cl.: E04B 9/18

(54) **BEFESTIGUNGSVORRICHTUNG**
FIXING DEVICE
DISPOSITIF DE FIXATION

(30) Priorität: 12.10.2021 DE 202021105528 U
(43) Veröffentlichungstag der Anmeldung: 19.04.2023
(73) Patentinhaber: Baustoff+Metall GmbH, 1230 Wien (AT)
(72) Erfinder: Roithinger, Jürgen, 1230 Wien (AT)
(74) Vertreter: Lichtnecker, Markus Christoph

(56) Entgegenhaltungen:
- DE-U1- 202016 102 338
- US-A- 2 676 680

## Beschreibung

Die Erfindung betrifft einen Bausatz mit einer Schiene und einer Befestigungsvorrichtung zum Befestigen wenigstens eines Bauteils an der Schiene.

Die Schiene weist eine Basis und zwei sich von der Basis aus erstreckende, parallel zueinander orientierte Schenkel auf. Die Schenkel weisen aufeinander zu gerichtete Vorsprünge auf.

Derartige Befestigungsvorrichtungen sind grundsätzlich bekannt und dienen dazu, beispielsweise einen Deckenabhänger mit einer Montageschiene zu verbinden.

An der Montageschiene werden beispielsweise Trockenbauelemente wie z.B. Deckenelemente befestigt.

Die herkömmlichen Befestigungsvorrichtungen klemmen hierbei die Vorsprünge der Schenkel der Schiene beidseitig ein. Beispielsweise können zwei Halteelemente die Vorsprünge von oben und unten einklemmen und daran halten. Die Fixierung kann beispielsweise mittels eines Verschraubens erfolgen.

US 2 676 680 A offenbart eine Vorrichtung zum Befestigen einer Gewindestange in einer Schiene.

Gemäß DE 20 2016 102 338 U1 können zum Fixieren Biegelaschen umgebogen werden.

Die Montage gestaltet sich dadurch vergleichsweise zeitaufwändig und somit kostenintensiv.

Es ist daher eine Aufgabe der Erfindung, einen Bausatz zu schaffen, welcher eine einfache, schnelle und kostengünstige Montage ermöglicht.

Die Lösung dieser Aufgabe erfolgt durch den Bausatz gemäß Anspruch 1.

Die Befestigungsvorrichtung des erfindungsgemäßen Bausatzes ist zum, vorzugsweise mittelbaren, Befestigen wenigstens eines Bauteils an einer Schiene ausgebildet und/oder kann hierzu verwendet werden.

Die Befestigungsvorrichtung kann an der Schiene befestigt werden.

Die Schiene weist eine, vorzugsweise längliche und/oder plattenförmige, Basis und zwei sich von der Basis aus erstreckende, parallel zueinander orientierte Schenkel auf. Die Basis und die Schenkel sind vorzugsweise einstückig ausgebildet.

Von der Basis der Schiene aus erstrecken sich zwei parallel zueinander orientierte, vorzugsweise längliche und/oder plattenförmige, Schenkel.

Vorzugsweise schließen die Schenkel mit der Basis jeweils einen rechten Winkel ein.

Die Schenkel weisen aufeinander zu gerichtete Vorsprünge auf. Die Vorsprünge sind vorzugsweise nach innen gerichtet. Beispielsweise können die Vorsprünge, vorzugsweise unter einem rechten Winkel, abgewinkelt sein.

Bei der Schiene kann es sich beispielsweise um eine Montageschiene, ein C-, CD- und/oder CW- Profil handeln.

Beispielsweise kann die Schiene ein Kunststoff- und/oder Metallmaterial, z.B. Stahl und/oder Aluminium, umfassen oder daraus bestehen.

Vorzugsweise kann die Schiene aus einem Blechmaterial geformt sein.

Bei der Schiene kann es sich z.B. um ein Strangpressprofil, beispielsweise aus Kunststoff und/oder Aluminium, handeln.

Die Befestigungsvorrichtung weist eine Fixiervorrichtung zum Fixieren des Bauteils an der Befestigungsvorrichtung auf.

Bei dem Bauteil kann es sich zum Beispiel um einen Deckenabhänger, einen Stab, z.B. Gewindestab, eine, vorzugsweise an gegenüberliegenden Seiten abgeflachte, Stange, z.B. Gewindestange, eine Schraube und/oder eine (Montage)Schiene handeln.

Durch den Stab, die Stange und/oder die Schraube kann beispielsweise auch im verbauten Zustand eine Nachjustierung der Höhe bzw. des Abstands zur Decke erfolgen.

Das Bauteil kann z.B. zur Befestigung an einer Decke, einer Wand und/oder einem Boden dienen.

Die Befestigungsvorrichtung ist vorzugsweise vielseitig einsetzbar. So können z.B. Decken abgehängt und/oder Kühl- bzw. Heizelemente montiert werden.

Die Fixiervorrichtung kann das Bauteil an der Befestigungsvorrichtung, vorzugsweise lösbar oder unlösbar, fixieren. Die Befestigungsvorrichtung wird wiederum an der Schiene befestigt. Auf diese Weise kann das Bauteil über die Befestigungsvorrichtung mittelbar an der Schiene befestigt werden.

Es ist auch möglich, dass das Bauteil und die Befestigungsvorrichtung eine Einheit bilden und/oder fest miteinander verbunden sind.

Die Befestigungsvorrichtung weist einen Spreizkörper mit zwei Spreizabschnitten auf. Die Spreizabschnitte sind zum Einspreizen an den Schenkeln und/oder an Abschnitten der Vorsprünge ausgebildet oder können hierzu verwendet werden. Die Abschnitte sind hierbei der Basis zugewandt. Es handelt sich somit gewissermaßen um die Unterseiten der Vorsprünge.

Vorzugsweise sind die Vorsprünge an den Stirnseiten in Richtung Basis gebogen. Dadurch können sich z.B. Hinterschneidungen bilden.

Über den Spreizkörper kann sich die Befestigungsvorrichtung seitlich an den Schenkeln und/oder von unten an den Vorsprüngen einspreizen.

Der Spreizkörper sorgt im an der Schiene montierten Zustand vorzugsweise für eine Zugsteifigkeit und/oder Drucksteifigkeit.

Die Befestigungsvorrichtung weist einen Stützkörper zum Abstützen an der Basis auf.

Der Stützkörper sorgt im an der Schiene montierten Zustand vorzugsweise für eine Zugsteifigkeit und/oder Drucksteifigkeit.

Der Stützkörper und der Spreizkörper wirken vorzugsweise zusammen.

Beispielsweise stützt sich die Befestigungsvorrichtung über den Stützkörper an der Basis ab und spreizt sich an den Schenkeln und/oder an den Abschnitten der Vorsprünge über den Spreizkörper ein.

Die Befestigung erfolgt somit lediglich von unten, also von der Basis, her. Der, beispielsweise obere, Bereich der Vorsprünge, welcher von der Basis abgewandt ist, wird nicht zur Befestigung benötigt und bleibt vorzugsweise frei. Die Vorsprünge selbst werden daher nicht beidseitig eingeklemmt.

Der Spreizkörper und der Stützkörper sind vorzugsweise einstückig ausgebildet. Bevorzugt ist die Fixiervorrichtung einstückig mit dem Spreizkörper und/oder dem Stützkörper ausgebildet.

Der Spreizkörper, der Stützkörper und/oder die Fixiervorrichtung kann ein Kunststoff- und/oder Metallmaterial, z.B. Stahl und/oder Aluminium, umfassen oder daraus bestehen.

Die Befestigungsvorrichtung weist eine Verstellvorrichtung zum Verstellen der Befestigungsvorrichtung zwischen einer Warteposition und einer Befestigungsposition auf.

Bevorzugt ist die Verstellvorrichtung einstückig mit dem Spreizkörper und/oder dem Stützkörper ausgebildet.

Die Verstellvorrichtung kann ein Kunststoff- und/oder Metallmaterial, z.B. Stahl und/oder Aluminium, umfassen oder daraus bestehen.

In der Befestigungsposition sind die Spreizabschnitte an den der Basis zugewandten Abschnitten der Vorsprünge und/oder an den Schenkeln eingespreizt. Zudem stützt sich der Stützkörper an der Basis ab.

Vorzugsweise ist die Befestigungsvorrichtung in der Befestigungsposition um 90° gegenüber der Warteposition versetzt.

Das Verstellen kann vorzugsweise manuell erfolgen, beispielsweise mittels eines Schraubenschlüssels.

Die Befestigungsvorrichtung kann vorzugsweise eine geringere Breite als Länge aufweisen. So kann diese in der Warteposition in die Schiene eingeführt werden. In der Befestigungsposition können sich die Spreizabschnitte hingegen einspreizen. Ein ungewolltes Lösen wird auf diese Weise verhindert.

Vorzugsweise können mehrere Befestigungsvorrichtungen bzw. Bauteile an einer gemeinsamen Schiene befestigt werden.

Durch die erfindungsgemäße Befestigungsvorrichtung gestaltet sich die Montage einfach, schnell und dadurch kostengünstig.

Erfindungsgemäß weist die Verstellvorrichtung eine Schlüsselaufnahme, vorzugsweise einen Außenmehrkant, auf.

Bei dem Außenmehrkant kann es sich z.B. um einen Außenvierkant, Außensechskant oder Außenachtkant handeln. Beispielsweise kann der Außenmehrkant als eine Schraubenmutter oder als Formgewinde ausgebildet sein.

Bevorzugt ist die Schlüsselaufnahme drehfest mit dem Spreizkörper und/oder dem Stützkörper verbunden und/oder einstückig damit ausgebildet.

Die Schlüsselaufnahme kann ein Kunststoff- und/oder Metallmaterial, z.B. Stahl und/oder Aluminium, umfassen oder daraus bestehen.

Das Verstellen erfolgt vorzugsweise manuell mittels eines Werkzeugs.

Zum Verstellen kann beispielsweise ein Schraubenschlüssel an der Schlüsselaufnahme angreifen und z.B. um 90° verdreht werden.

Weiterbildungen der Erfindung sind auch den abhängigen Ansprüchen, der Beschreibung sowie den beigefügten Zeichnungen zu entnehmen.

Nach einer Ausführungsform weisen die Spreizabschnitte Spreizflächen auf, welche vorzugsweise konvex und/oder konkav geformt sind.

Die Spreizflächen sind vorzugsweise zum Einspreizen an den der Basis zugewandten Abschnitten, z.B. Hinterschneidungen, der Vorsprünge ausgebildet und/oder können hierzu verwendet werden.

Durch die konvexe Form sind die Randbereiche der Spreizflächen beispielsweise niedriger als ein Zentralbereich der Spreizflächen. **In** der Befestigungsposition kann der Zentralbereich daher für einen sicheren Halt sorgen. Die niedrigeren Randbereiche ermöglichen hingegen ein einfaches Eindrehen unter die Vorsprünge.

Die konvexe Form erleichtert das Verstellen der Befestigungsvorrichtung zwischen der Warteposition und der Befestigungsposition.

Vorzugsweise sind die Breitseiten der Spreizflächen konvex oder konkav geformt. Die Breitseiten sind in der Befestigungsposition unterhalb der Vorsprünge angeordnet.

Alternativ oder zusätzlich können die Längsseiten der Spreizflächen beispielsweise eine Bombierung aufweisen. Zum Beispiel können die Längsseiten konvex oder konkav geformt sein. Auch dadurch kann das Verstellen der Befestigungsvorrichtung zwischen der Warteposition und der Befestigungsposition erleichtert und/oder der Halt in der Befestigungsposition verbessert werden.

Vorzugsweise sind die Breitseiten der Spreizflächen konvex und die Längsseiten der Spreizflächen konkav geformt.

Die Spreizabschnitte, vorzugsweise die Spreizflächen, können beispielswiese ein schallabsorbierendes Material aufweisen oder daraus bestehen. Beispielsweise kann es sich bei dem Material um ein Kunststoffmaterial, z.B. ein Gummimaterial, handeln. Zum Beispiel kann eine Tülle aus dem schallabsorbierenden Material über die Spreizflächen gestülpt sein.

Gemäß einer weiteren Ausführungsform weisen die Spreizabschnitte Stirnseiten mit Rundungen auf.

Die Stirnseiten, z.B. der Breitseiten, sind vorzugsweise zum Einspreizen an den Schenkeln ausgebildet und/oder können hierzu verwendet werden.

Beispielsweise können die Eckbereiche der Stirnseiten abgerundet sein.

Die Rundungen erleichtert das Verstellen der Befestigungsvorrichtung zwischen der Warteposition und der Befestigungsposition.

Nach einer weiteren Ausführungsform weist der Stützkörper zwei, vorzugsweise parallel zueinander orientierte, Stützplatten auf oder besteht daraus.

Die Stützplatten sind vorzugsweise zum Abstützen an der Basis ausgebildet und/oder können hierzu verwendet werden.

Vorzugsweise können die Stützplatten abgerundet sein.

Beispielsweise können die Eckbereiche der vom Spreizkörper abgewandten Stirnseiten abgerundet sein.

Die Rundungen erleichtern das Verstellen der Befestigungsvorrichtung zwischen der Warteposition und der Befestigungsposition.

Gemäß einer weiteren Ausführungsform sind die Stützplatten rechtwinklig zum Spreizkörper, vorzugsweise zu den Spreizflächen, orientiert.

Die Stützplatten können sich beispielsweise vom Spreizkörper, vorzugsweise den Längsseiten der Spreizflächen, aus erstrecken.

Die Stützplatten und die Spreizflächen können beispielsweise ineinander übergehen und/oder einstückig ausgebildet sein.

Beispielsweise können die Stützplatten aus der Ebene der Spreizflächen nach unten gebogen sein.

Nach einer weiteren Ausführungsform weisen die Stützplatten Markierungen auf.

Die Markierungen dienen vorzugsweise dazu, die Befestigungsvorrichtungen an der gewünschten Position auszurichten.

Beispielsweise können mehrere Befestigungsvorrichtungen auf dieselbe Höhe eingestellt werden, ehe die Schiene montiert wird.

Die Markierungen können z.B. eine Skalierung und/oder Aussparung aufweisen. Die Aussparung kann z.B. rund oder eckig, beispielsweise viereckig, z.B. quadratisch und/oder rautenförmig, sein. Zum Vermessen kann beispielsweise ein Laser und/oder eine Schlagschnur eingesetzt werden.

Auf diese Weise kann z.B. eine Justierung der Höhe bzw. des Abstands zur Decke erfolgen.

Gemäß einer weiteren Ausführungsform weist die Fixiervorrichtung ein Gewinde, vorzugsweise Innengewinde, auf.

In dem Gewinde kann z.B. ein ebenfalls mit einem Gewinde, vorzugsweise Außengewinde, versehenes Bauteil, z.B. ein Deckenabhänger, ein Stab, z.B. Gewindestab, und/oder eine Schraube, befestigt werden.

Gemäß einer Ausführungsform weist der Bausatz das Bauteil oder mehrere Bauteile auf. Vorzugsweise weist das Bauteil eine Gewindestange auf.

Ein Außengewinde des Bauteils kann zum Fixieren an der Fixiervorrichtung dienen.

Das Bauteil kann vorzugsweise einen Deckenabhänger, einen Stab, z.B. Gewindestab, und/oder eine Schraube umfassen oder daraus bestehen. Ferner kann das Bauteil einen Dübel aufweisen.

Schließlich betrifft die Erfindung ein Verfahren zum Befestigen wenigstens eines Bauteils an einer Schiene mit einer erfindungsgemäßen Befestigungsvorrichtung, bei dem die Befestigungsvorrichtung, vorzugsweise um 90°, zwischen der Warteposition und der Befestigungsposition verstellt wird.

Beispielsweise kann das Bauteil z.B. an einer Decke montiert werden.

Vorzugsweise kann mittels der Fixiervorrichtung eine Fixierung des Bauteils an der Befestigungsvorrichtung erfolgen.

Optional kann eine Ausrichtung der Befestigungsvorrichtung über Markierungen erfolgen.

Anschließend kann die Befestigungsvorrichtung verstellt werden.

Während des Verstellens können sich die Schenkel der Schiene beispielsweise vorübergehende verformen, z.B. ausbuchten.

In der Befestigungsposition spreizen sich die Spreizabschnitte an den Schenkeln und/oder an Abschnitten der Vorsprünge ein und der Stützkörper stützt sich an der Basis ab.

Alle hier beschriebenen Ausführungsformen und Bauteile der Vorrichtungen sind vorzugsweise dazu ausgebildet, nach dem hier beschriebenen Verfahren befestigt zu werden. Ferner können alle hier beschriebenen Ausführungsformen der Vorrichtungen sowie alle hier beschriebenen Ausführungsformen des Verfahrens jeweils miteinander kombiniert werden, vorzugsweise auch losgelöst von der konkreten Ausgestaltung, in deren Zusammenhang sie erwähnt werden.

Die Erfindung wird im Folgenden beispielhaft unter Bezugnahme auf die Zeichnungen beschrieben. Es zeigen:
- Fig. 1: eine Perspektivansicht einer Montageschiene gemäß dem Stand der Technik,
- Fig. 2: eine Perspektivansicht einer Ausführungsform einer erfindungsgemäßen Befestigungsvorrichtung,
- Fig. 3: eine Vorderansicht der Befestigungsvorrichtung gemäß Fig. 2 in einer Warteposition, und
- Fig. 4: eine Vorderansicht der Befestigungsvorrichtung gemäß Fig. 2 in einer Befestigungsposition.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

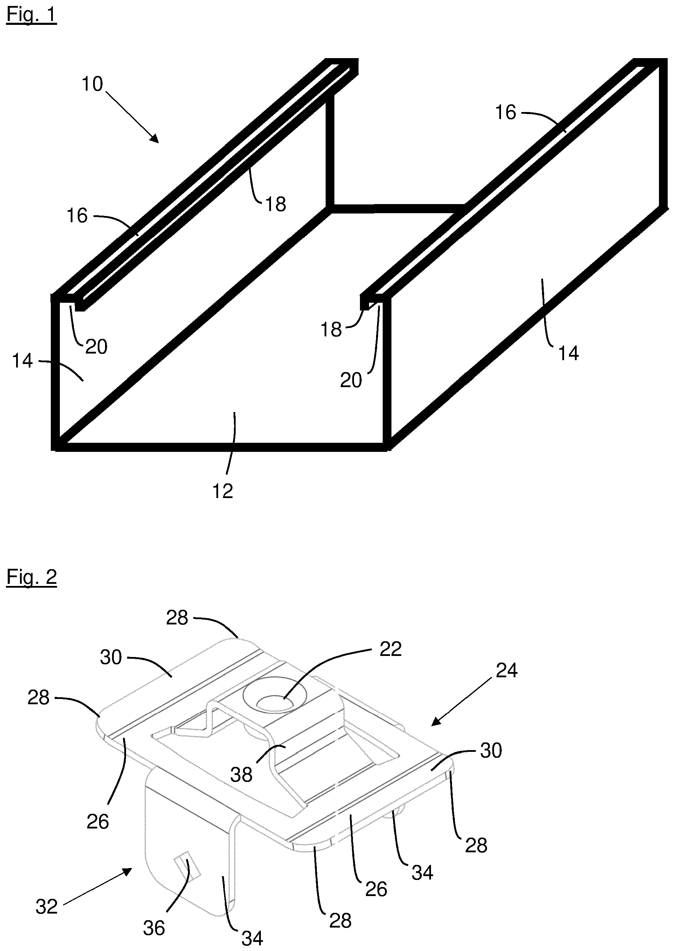

Fig. 1 zeigt eine herkömmliche Schiene 10 mit einer Basis 12 und zwei sich von der Basis 12 aus erstreckenden, parallel zueinander orientierten Schenkeln 14.

Die Schenkel 14 weisen aufeinander zu gerichtete Vorsprünge 16 auf.

Abschnitte 18 der Vorsprünge 16, z.B. die Unterseiten, können der Basis 12 zugewandt sein und Hinterschneidungen 20 aufweisen.

**In** Fig. 2 ist eine Befestigungsvorrichtung dargestellt, welche eine Fixiervorrichtung 22 zum Fixieren eines Bauteils an der Befestigungsvorrichtung aufweist.

Die Fixiervorrichtung 22 kann z.B. ein Innengewinde, vorzugsweise ein Formgewinde, aufweisen.

Alternativ kann die Fixiervorrichtung 22 auch nach oben ausgeprägt sein, um z.B. eine größere Verstellhöhe bereitzustellen.

Die Befestigungsvorrichtung weist einen Spreizkörper 24 mit zwei Spreizabschnitten 26 zum Einspreizen an den Abschnitten 18 der Vorsprünge 16 und an den Schenkeln 14 der Schiene 10 auf.

Die Spreizabschnitte 26 weisen an den Stirnseiten Rundungen 28 auf.

Ferner weisen die Spreizabschnitte 26 Spreizflächen 30 auf, welche vorzugsweise konvex geformt sind.

Die Befestigungsvorrichtung weist einen Stützkörper 32 zum Abstützen an der Basis 12 auf.

Der Stützkörper 32 weist zwei parallel zueinander orientierte Stützplatten 34 auf, welche sich vom Spreizkörper 24 aus rechtwinklig nach unten erstrecken.

Die Stützplatten 34 können z.B. als Aussparungen ausgebildete Markierungen 36 aufweisen.

Die Befestigungsvorrichtung weist eine Verstellvorrichtung 38 auf. Diese kann z.B. als Außenvierkant ausgebildet sein.

Beispielsweise mittels eines Schraubenschlüssels kann ein Verstellen der Befestigungsvorrichtung zwischen einer Warteposition und einer gegenüber der Warteposition um 90° versetzten Befestigungsposition erfolgen.

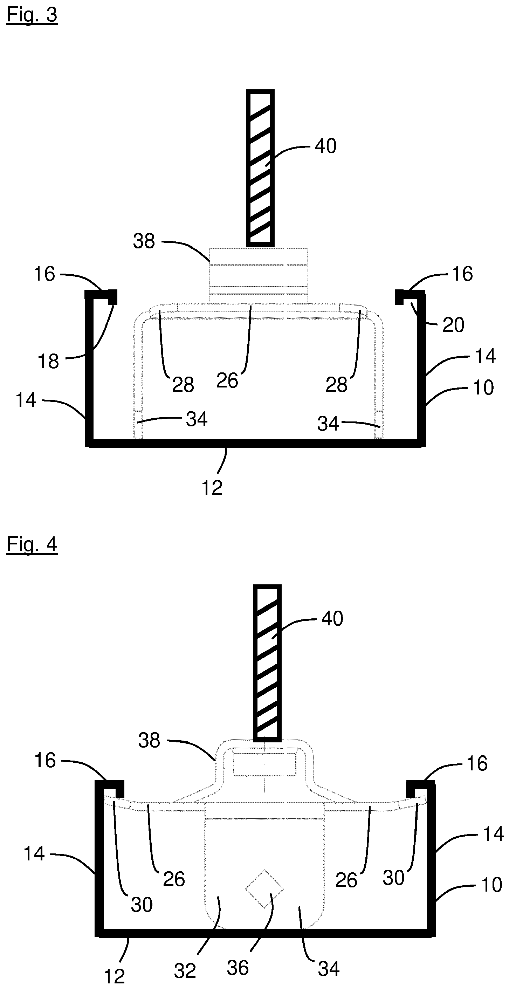

In Fig. 3 befindet sich die Befestigungsvorrichtung in der Warteposition.

Ein Bauteil 40 kann dabei mit der Fixiervorrichtung 22 der Befestigungsvorrichtung verbunden, beispielsweise verschraubt, sein.

Die Breite der Befestigungsvorrichtung ist vorzugsweise schmäler als die Schiene 10. Daher kann die Befestigungsvorrichtung problemlos in die Schiene 10 eingesetzt werden.

Beispielsweise kann die Breite zwischen 2 cm und 10 cm, vorzugsweise zwischen 4 cm und 5 cm, z.B. 4,6 cm, betragen.

Die Länge der Befestigungsvorrichtung kann beispielsweise zwischen 2 cm und 10 cm, vorzugsweise zwischen 5 cm und 7 cm, z.B. 6 cm, betragen.

Die Stützplatten 34 können beispielsweise schmäler als die Befestigungsvorrichtung sein. Beispielswiese können sich diese zwischen 1 cm und 5 cm, vorzugsweise zwischen 2 cm und 3 cm, z.B. 2,2 cm, erstrecken.

Die Länge ist vorzugsweise größer als die Breite.

Die Höhe der Befestigungsvorrichtung kann beispielsweise zwischen 1 cm und 10 cm, vorzugsweise zwischen 3 cm und 4 cm, z.B. 3,5 cm, betragen.

Die Stützplatten 34 können beispielsweise niedriger als die Befestigungsvorrichtung sein. Beispielswiese können sich diese zwischen 1 cm und 5 cm, vorzugsweise zwischen 2 cm und 3 cm, z.B. 2,3 cm, erstrecken.

Die Dicke der Stützplatten 34 und/oder der Spreizabschnitte 26 kann beispielsweise zwischen 1 mm und 2 mm, z.B. 1,5 mm, betragen.

**In** Fig. 4 befindet sich die Befestigungsvorrichtung in der Befestigungsposition.

Die Spreizabschnitte 26 sind an den Abschnitten 18 sowie den Schenkeln 14 eingespreizt.

Die Stützplatten 34 des Stützkörpers 32 stützen sich an der Basis 12 ab.

Ehe die Befestigungsvorrichtung mit der Schiene 10 verbunden wird, kann über die Markierungen 36 die Höhe gemessen und über das Bauteil 40 bei Bedarf eingestellt werden. Beispielswiese kann das Bauteil 40 hierzu in die Fixiervorrichtung 22 hinein oder heraus gedreht werden.

### Bezugszeichenliste

- 10: Schiene
- 12: Basis
- 14: Schenkel
- 16: Vorsprung
- 18: Abschnitt
- 20: Hinterschneidung
- 22: Fixiervorrichtung
- 24: Spreizkörper
- 26: Spreizabschnitt
- 28: Rundung
- 30: Spreizfläche
- 32: Stützkörper
- 34: Stützplatte
- 36: Markierungen
- 38: Verstellvorrichtung
- 40: Bauteil

## Patentansprüche

1. Bausatz mit
- einer Schiene (10) mit einer Basis (12) und zwei sich von der Basis (12) aus erstreckenden, parallel zueinander orientierten Schenkeln (14) mit aufeinander zu gerichteten Vorsprüngen (16) und
- wenigstens einer Befestigungsvorrichtung zum Befestigen wenigstens eines Bauteils (40) an der Schiene (10), mit
einer Fixiervorrichtung (22) zum Fixieren des Bauteils (40) an der Befestigungsvorrichtung,
einem Spreizkörper (24) mit zwei Spreizabschnitten (26) zum Einspreizen an der Basis (12) zugewandten Abschnitten (18) der Vorsprünge (16) und/oder an den Schenkeln (14),
einem Stützkörper (32) zum Abstützen an der Basis (12), und
einer Verstellvorrichtung (38) zum Verstellen der Befestigungsvorrichtung zwischen einer Warteposition und einer, vorzugsweise gegenüber der Warteposition um 90° versetzten, Befestigungsposition, in der die Spreizabschnitte (26) eingespreizt sind und sich der Stützkörper (32) abstützt, wobei die Verstellvorrichtung (38) eine Schlüsselaufnahme aufweist.

2. Bausatz nach Anspruch 1,
**dadurch gekennzeichnet,**
**dass** die Schlüsselaufnahme ein Außenmehrkant ist.

3. Bausatz nach Anspruch 1 oder 2,
**dadurch gekennzeichnet,**
**dass** die Spreizabschnitte (26) Spreizflächen (30) aufweisen, welche konvex und/oder konkav geformt sind.

4. Bausatz nach einem der vorhergehenden Ansprüche,
**dadurch gekennzeichnet,**
**dass** die Spreizabschnitte (26) Stirnseiten mit Rundungen (28) aufweisen.

5. Bausatz nach einem der vorhergehenden Ansprüche,
**dadurch gekennzeichnet,**
**dass** der Stützkörper (32) zwei, vorzugsweise parallel zueinander orientierte, Stützplatten (34) aufweist oder daraus besteht.

6. Bausatz nach Anspruch 5,
**dadurch gekennzeichnet,**
**dass** die Stützplatten (34) rechtwinklig zum Spreizkörper (24) orientiert sind.

7. Bausatz nach Anspruch 5 oder 6,
**dadurch gekennzeichnet,**
**dass** die Stützplatten (34) Markierungen (36) aufweisen.

8. Bausatz nach einem der vorhergehenden Ansprüche,
**dadurch gekennzeichnet,**
**dass** die Fixiervorrichtung (22) ein Gewinde, vorzugsweise Innengewinde, aufweist.

9. Bausatz nach einem der vorhergehenden Ansprüche,
**gekennzeichnet durch**
das Bauteil (40), vorzugsweise mit einer Gewindestange.

## Claims

1. Kit comprising
- a rail (10) with a base (12) and two legs (14) extending from the base (12) and oriented parallel with each other and having projections (16) directed towards each other, and
- at least one fastening device for fastening at least one component (40) to the rail (10), with
a fixing device (22) for fixing the component (40) to the fastening device,
a spreading body (24) with two spreading sections (26) for spreading against sections (18) of the projections (16) facing the base (12) and/or against the legs (14),
a support body (32) for bracing against the base (12), and
an adjustment device (38) for adjusting the fastening device between a standby position and a fastening position, which is preferably offset by 90° from the standby position, wherein in the fastening position the spreading sections (26) are spread apart and the support body (32) is braced, wherein the adjustment device (38) comprises a tool receptacle.

2. Kit in accordance with claim 1,
**characterized in that**
the tool receptacle is an external polygon.

3. Kit in accordance with claim 1 or 2,
**characterized in that**
the spreading sections (26) have spreading surfaces (30) which are convex and/or concave in shape.

4. Kit in accordance with any of the preceding claims,
**characterized in that**
the spreading sections (26) have end faces with rounded portions (28).

5. Kit in accordance with any of the preceding claims,
**characterized in that**
the support body (32) comprises or consists of two support plates (34), preferably oriented parallel with each other.

6. Kit in accordance with claim 5,
**characterized in that** the support plates (34)
are oriented at right angles to the spreading body (24).

7. Kit in accordance with claim 5 or 6,
**characterized in that**
the support plates (34) have markings (36).

8. Kit in accordance with any of the preceding claims,
**characterized in that**
the fixing device (22) has a thread, preferably an internal thread.

9. Kit in accordance with any of the preceding claims,
**characterized in that**
the component (40), preferably comprising a threaded rod.

## Revendications

1. Kit comprenant :
- un rail (10) présentant une base (12) et deux ailes (14) orientées parallèlement l'une à l'autre, s'étendant à partir de la base (12) et comportant des saillies (16) dirigées l'une vers l'autre, et
- au moins un dispositif de fixation destiné à fixer au moins une pièce (40) au rail (10), comprenant
un dispositif d'immobilisation (22) destiné à immobilier la pièce (40) sur le dispositif de fixation,
un corps d'écartement (24) présentant deux parties d'écartement (26) destinées à s'écarter au niveau des parties (18) des saillies (16) tournées vers la base (12) et/ou au niveau des ailes (14),
un corps d'appui (32) destiné à s'appuyer sur la base (12), et
un dispositif de réglage (38) destiné à régler le dispositif de fixation entre une position d'attente et une position de fixation, de préférence décalée de 90° par rapport à la position d'attente, dans laquelle les parties d'écartement (26) sont écartées et le corps d'appui (32) est en appui, le dispositif de réglage (38) présentant un logement d'application de clé.

2. Kit selon la revendication 1,
**caractérisé en ce que** le logement d'application de clé est un polygone extérieur.

3. Kit selon la revendication 1 ou 2,
**caractérisé en ce que** les parties d'écartement (26) présentent des surfaces d'écartement (30) qui sont de forme convexe et/ou concave.

4. Kit selon l'une des revendications précédentes,
**caractérisé en ce que** les parties d'écartement (26) présentent des faces frontales avec des arrondis (28).

5. Kit selon l'une des revendications précédentes,
**caractérisé en ce que** le corps d'appui (32) comporte ou est constitué de deux plaques d'appui (34) orientées de préférence parallèlement l'une à l'autre.

6. Kit selon la revendication 5,
**caractérisé en ce que** les plaques d'appui (34) sont orientées perpendiculairement au corps d'écartement (24).

7. Kit selon la revendication 5 ou 6,
**caractérisé en ce que** les plaques d'appui (34) présentent des repères (36).

8. Kit selon l'une des revendications précédentes,
**caractérisé en ce que** le dispositif d'immobilisation (22) présente un pas de vis, de préférence un taraudage.

9. Kit selon l'une des revendications précédentes,
**caractérisé par** la pièce (40), présentant de préférence une tige filetée.
